# DEMANDE DE BREVET EUROPEEN

(11) **EP 2 965 972 A1**
(43) Date de publication de la demande: **13.01.2016**
(21) Numéro de dépôt: 15175543.6
(22) Date de dépôt: 06.07.2015
(51) Int. Cl.: B62D 21/17, B62D 25/06

(54) **MODULE FORMANT UN ÉLÉMENT DE CARROSSERIE POUR VÉHICULE AUTOMOBILE PARTICIPANT À L'ESTHÉTIQUE EXTÉRIEURE DU VÉHICULE**

(30) Priorité: 09.07.2014 FR 1456624
(71) Demandeur: VALEO VISION, 93012 Bobigny Cedex (FR)
(72) Inventeur: GODBILLON, Vincent, 75011 PARIS (FR)

(57) **Abrégé**

Le module (12) forme un élément de carrosserie (22) pour véhicule automobile (2) et participe à l'esthétique extérieure du véhicule (2). Il est destiné à être monté sur une caisse (4) du véhicule (2). Il comprend des moyens électriques d'éclairage intérieur (14), destinés à éclairer l'intérieur d'un habitacle du véhicule (2), et des moyens de raccordement (18) à une alimentation électrique des moyens d'éclairage intérieur (14).

## Description

La présente invention concerne les domaines techniques des systèmes d'éclairage et de signalisation pour véhicule automobile et des éléments de carrosserie pour véhicule automobile. Plus particulièrement, l'invention concerne un module formant un élément de carrosserie pour véhicule automobile, ce module participant à l'esthétique extérieure du véhicule et étant destiné à être monté sur une caisse du véhicule.

Un véhicule automobile comprend généralement plusieurs moyens d'éclairage et de signalisation remplissant des fonctions diverses. Par exemple, un bloc optique avant de véhicule automobile a pour principales fonctions d'éclairer la route et de rendre le véhicule visible des véhicules roulant en sens inverse sur une voie adjacente, notamment de nuit et en cas de conditions météorologiques difficiles. Un feu stop arrière du véhicule permet d'envoyer des informations à des conducteurs d'autres véhicules, telles que l'annonce d'un freinage. Un éclairage intérieur permet d'éclairer l'intérieur de l'habitacle du véhicule, notamment de nuit.

Il est connu de réaliser ces moyens d'éclairage et de signalisation séparément et de les installer dans la caisse du véhicule. Ces moyens doivent ensuite être raccordés séparément à une batterie commune du véhicule. Les opérations de montage et de connexion des moyens d'éclairage et de signalisation sont contraignantes pour l'opérateur ou la machine qui les réalise car elles doivent être effectuées dans la caisse du véhicule. Celle-ci délimite un espace relativement confiné et difficile d'accès, dont les parois peuvent gêner les mouvements de l'opérateur ou de la machine. Ces opérations sont donc pénibles pour un opérateur, et il faut prévoir des articulations complexes pour une machine afin de lui permettre de se déplacer dans la caisse, ce qui représente un surcoût et une complexification de la commande de la machine. Les opérations de montage et de connexion sont donc longues et fastidieuses, et chaque opération de connexion constitue un risque de défaut de branchement.

L'invention a pour but de rendre plus simple, rapide et fiable le montage d'au moins certains moyens d'éclairage ou de signalisation dans un véhicule automobile.

A cet effet, on prévoit selon l'invention un module formant un élément de carrosserie pour véhicule automobile, ce module participant à l'esthétique extérieure du véhicule et étant destiné à être monté sur une caisse du véhicule, caractérisé en ce qu'il comprend des moyens électriques d'éclairage intérieur, destinés à éclairer l'intérieur d'un habitacle du véhicule, et des moyens de raccordement à une alimentation électrique des moyens d'éclairage intérieur.

Ainsi, l'installation des moyens électriques d'éclairage intérieur peut se faire dans le module avant montage du module sur une caisse de véhicule automobile, ce qui évite d'avoir à faire cette installation dans la caisse du véhicule. On évite ainsi d'avoir à réaliser certaines connexions fastidieuses et compliquées dans la caisse du véhicule.

De plus, après montage du module sur la caisse du véhicule, il suffit de connecter les moyens de raccordement du module à une alimentation électrique du véhicule, ce qui permet de réduire la durée de l'installation des moyens électriques d'éclairage intérieur du véhicule, d'éviter les risques de branchement défectueux, et d'améliorer la fiabilité du raccordement du module à l'alimentation électrique du véhicule. Au surplus, les moyens électriques d'éclairage intérieur du véhicule étant incorporés dans un élément de carrosserie formé par le module, on permet ainsi de réduire le nombre d'éléments du véhicule à assembler sur une chaîne de montage d'un véhicule complet.

Avantageusement, l'élément de carrosserie forme au moins une partie d'un toit du véhicule.

Ce choix est intéressant car les moyens électriques d'éclairage intérieur d'un véhicule automobile sont généralement situés à proximité du toit du véhicule.

Avantageusement, le module comprend de plus des moyens électriques d'éclairage extérieur ou de signalisation extérieure, destinés à éclairer l'extérieur du véhicule ou participer à la signalisation du véhicule.

On diminue ainsi le nombre de moyens d'éclairage et de signalisation séparés, et donc le nombre d'opérations de montage et de connexion à effectuer à l'intérieur de la caisse du véhicule. Ceci a pour effet de réduire le temps de montage des moyens d'éclairage et de signalisation dans le véhicule et les risques de branchement défectueux de ces moyens à l'alimentation électrique du véhicule.

Avantageusement, le module comprend au moins deux compartiments dans lesquels sont logés respectivement, d'une part, les moyens d'éclairage intérieur et, d'autre part, les moyens d'éclairage extérieur ou de signalisation extérieure, ces deux compartiments étant séparés par une cloison formée, le cas échéant, par un circuit imprimé raccordé aux moyens d'éclairage intérieur et/ou aux moyens d'éclairage extérieur ou de signalisation extérieure.

On s'assure ainsi que les moyens d'éclairage intérieur et les moyens d'éclairage extérieur ou de signalisation extérieure n'interfèrent pas l'un avec l'autre, ce qui engendrerait le cas échéant une pollution lumineuse nuisible.

Avantageusement, les moyens d'éclairage extérieur ou de signalisation extérieure comprennent un système optique formant projecteur du véhicule.

Avantageusement, les moyens d'éclairage extérieur ou de signalisation extérieure comprennent un système optique formant feu arrière du véhicule.

Avantageusement, les moyens d'éclairage extérieur ou de signalisation extérieure comprennent un système optique formant feu stop central surélevé du véhicule.

Le module comprend ainsi une grande partie des divers moyens d'éclairage et de signalisation que comportent généralement un véhicule automobile, ce qui permet de réduire le temps d'installation des moyens d'éclairage et de signalisation dans la caisse du véhicule et les risques de branchement défectueux.

Avantageusement, le module comporte en outre au moins une partie de baie pour vitre de véhicule.

Avantageusement, le module comporte comportant en outre au moins une partie de montants de l'un au moins d'un pare-brise avant, d'un pare-brise arrière et de vitres du véhicule.

Avantageusement, le module comprend de plus au moins un élément choisi parmi :
- un rétroviseur intérieur de véhicule,
- un rétroviseur extérieur de véhicule,
- un essuie-glace avec de préférence des moyens d'entrainement de l'essuie-glace,
- une antenne de réception radio,
- une caméra,
- un capteur, et
- un revêtement de décoration.

On réduit ainsi davantage le nombre d'éléments du véhicule à monter séparément dans la caisse du véhicule.

Avantageusement, le module comprend de plus des moyens de raccordement à des moyens de communication de données par exemple un bus de communication de données de type CAN ou LIN, acronymes respectifs des termes anglo-saxons « Controller Area Network » et « Local Interconnect Network ».

Le module comprend ainsi également des moyens de communication permettant le transport d'informations relatives à la commande des moyens d'éclairage et de signalisation.

L'invention sera mieux comprise à la lecture de la description qui va suivre donnée uniquement à titre d'exemple et faite en référence aux dessins dans lesquels :
- la figure 1 est une vue de côté d'un véhicule automobile sur lequel est monté un module selon un premier mode de réalisation,
- la figure 2 est une vue en coupe longitudinale du module illustré en figure 1,
- la figure 3 est une vue de dessous du module illustré en figure 2,
- la figure 4 est une vue en coupe longitudinale d'une variante du module illustré en figure 2, et
- les figures 5 et 6 sont des vues de côté d'un véhicule automobile sur lequel est monté un module selon des deuxième et troisième modes de réalisation de l'invention.

Dans la description qui suit, on se place dans le référentiel d'un véhicule automobile 2 qu'on munit d'un repère cartésien R(O, x, y, z), dans lequel O est le point central du volume défini par le véhicule, l'axe (Ox) correspond à l'axe principal du véhicule et à la direction X, l'axe (Oy) correspond à la direction horizontale perpendiculaire à l'axe principal du véhicule et à la direction Y, et l'axe (Oz) est la verticale du lieu et correspond à la direction Z.

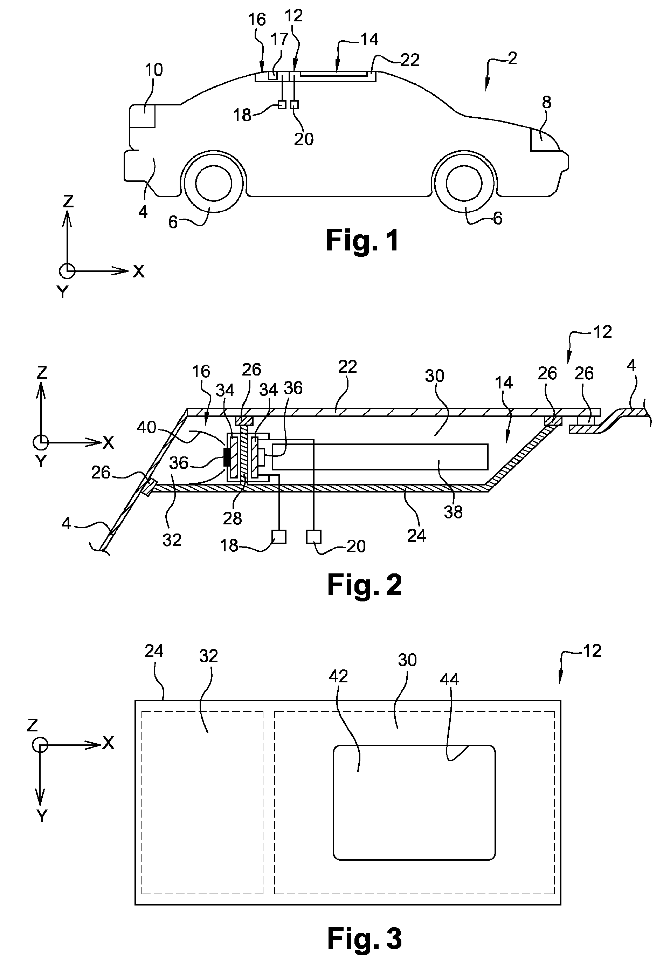

En référence aux figures 1 à 3, le véhicule 2 comporte une caisse 4, des roues 6, des blocs optiques avant 8 et des feux arrière 10.

Un module 12 selon un premier mode de réalisation de l'invention est monté sur la caisse 4 du véhicule 2. Ce module 12 comprend des moyens électriques d'éclairage intérieur 14, destinés à éclairer l'intérieur d'un habitacle du véhicule, et des moyens électriques d'éclairage extérieur ou de signalisation extérieure 16 comprenant ici un feu stop central surélevé 17 communément désigné CHMSL, acronyme pour les termes anglo-saxons « center high-mount stop lamp ». On verra dans la suite de quelle manière la fonction d'éclairage intérieur et la fonction d'éclairage extérieur ou de signalisation extérieure sont réalisées.

Le module 12 comprend également des moyens de raccordement 18 à une alimentation électrique (non représentée) des moyens d'éclairage intérieur 14 et des moyens d'éclairage extérieur ou de signalisation extérieure 16. La batterie du véhicule 2 peut par exemple constituer l'alimentation électrique du module 12, mais on peut prévoir que le véhicule 2 comprenne une alimentation électrique qui soit spécifiquement dédiée au module 12, voire même que le module 12 comprenne une alimentation électrique qui lui soit dédiée. Les moyens de raccordement 18 ont pour fonction d'approvisionner en énergie électrique les moyens d'éclairage intérieur 14 et les moyens d'éclairage extérieur ou de signalisation extérieure 16.

Le module 12 comprend également des moyens de raccordement 20 à des moyens de communication de données (non représentés), par exemple un bus de communication de données de type CAN ou LIN, acronymes respectifs des termes anglo-saxons « Controller Area Network » et « Local Interconnect Network ». Les moyens de communication de données ont pour fonction de commander l'activation et la désactivation des moyens d'éclairage intérieur 14 et des moyens d'éclairage extérieur ou de signalisation extérieure 16 du module 12 lorsque surviennent des évènements prédéterminés, comme par exemple un freinage ou l'ouverture d'une portière du véhicule 2.

En considérant le module 12 dans sa configuration montée sur le véhicule 2, ce module 12 comprend une paroi supérieure 22 recouvrant un corps inférieur 24.

Dans l'exemple illustré, la paroi supérieure 22 forme le toit ou au moins une partie du toit du véhicule 2 et participe ainsi à l'esthétique extérieure du véhicule 2. On peut prévoir que la paroi supérieure 22 soit partiellement voire entièrement vitrée. Le corps inférieur 24 forme au moins une partie d'un plafond de l'habitacle.

Le module 12 est assemblé séparément du véhicule 2, c'est-à-dire qu'il forme un tout pouvant être fabriqué à un endroit différent du lieu de montage du module 12 sur le véhicule 2.

On a illustré plus en détails en figures 2 et 3 le module 12. Lorsque le module 12 est monté sur le véhicule 2, le toit 22 et le plafond 24 s'étendent au moins en partie sensiblement parallèlement à un plan perpendiculaire à la direction Z. Le toit 22, le plafond 24 et la caisse 4 sont reliés les uns avec les autres par l'intermédiaire de moyens de fixation 26 classiques. On peut prévoir que ces moyens de fixation 26 soient démontables ou non.

Le corps inférieur 24 comprend une cloison 28 s'étendant au moins en partie sensiblement parallèlement au plan (Oyz). Cette cloison 28 sépare en des premier et second compartiments 30, 32 le volume intérieur du module 12. Une extrémité de cette cloison 28 est reliée au toit 22 par l'intermédiaire de moyens de fixation 26.

Le premier compartiment 30, situé plus à l'avant du véhicule 2 que le second compartiment 32 en considérant le sens de déplacement du véhicule 2, comprend un PCB 34, sigle pour les termes anglo-saxons « Printed Circuit Board », sur lequel est connectée une source de lumière 36, comprenant ici une diode électroluminescente. Le premier compartiment 30 comprend également un système optique de diffusion 38 placé en face de la source de lumière 36, destiné à recevoir la lumière émise par la source 36 et à la réémettre en direction de l'habitacle du véhicule 2. A titre d'exemple de réalisation, le système optique de diffusion 38 peut par exemple être formé par un guide de lumière classique, par exemplaire de type tubulaire ou surfacique. Le premier compartiment 30 comprend ainsi les éléments formant les moyens d'éclairage intérieur 14 du véhicule 2.

Le second compartiment 32 comprend également un PCB 34 sur lequel est connectée une source de lumière 36. Un système optique de projection 40, par exemple comportant un réflecteur, est placé en face de la source de lumière 36. Ce système optique de projection 40 est destiné à projeter la lumière émise par la source de lumière 36 vers l'arrière du véhicule 2. Le second compartiment 32 comprend ainsi les éléments formant les moyens d'éclairage extérieur ou de signalisation extérieure 16 du véhicule.

Sur la figure 3, les deux compartiments 30, 32 du module 12 sont représentés par des lignes discontinues. Le plafond 24 comporte un orifice 42, délimité par un contour 44, destiné à laisser passer la lumière transmise par le système optique de diffusion 38. On peut prévoir qu'une vitre, éventuellement opalescente, soit logée dans cet orifice 42.

Le module 12 comporte ainsi deux compartiments 30, 32 dans lesquels sont logés respectivement, d'une part, les moyens d'éclairage intérieur 14 et, d'autre part, les moyens d'éclairage extérieur ou de signalisation extérieure 16, ces deux compartiments étant séparés par la cloison 28.

Le montage du module 12 sur le véhicule 2 se fait comme suit : on positionne le module 12 sur la caisse 4 du véhicule 2, on connecte les moyens de raccordement 18 à l'alimentation du véhicule 2, on connecte les moyens de raccordement 20 aux moyens de communication de données, et on fixe le module 12 au véhicule 2 avec les moyens de fixation 26. On comprend ainsi que le montage du module 12 est particulièrement simple et rapide, notamment parce que la plupart des opérations de montage et de connexion des moyens d'éclairage intérieur 14 et des moyens d'éclairage extérieur ou de signalisation extérieure sont réalisées en dehors de la caisse 4 du véhicule 2, lors du pré-assemblage du module 12. Les risques de branchement défectueux sont en outre limités grâce aux moyens de raccordement 18, 20 peu nombreux qu'il faut simplement connecter à l'alimentation électrique et aux moyens de communication de données du véhicule 2.

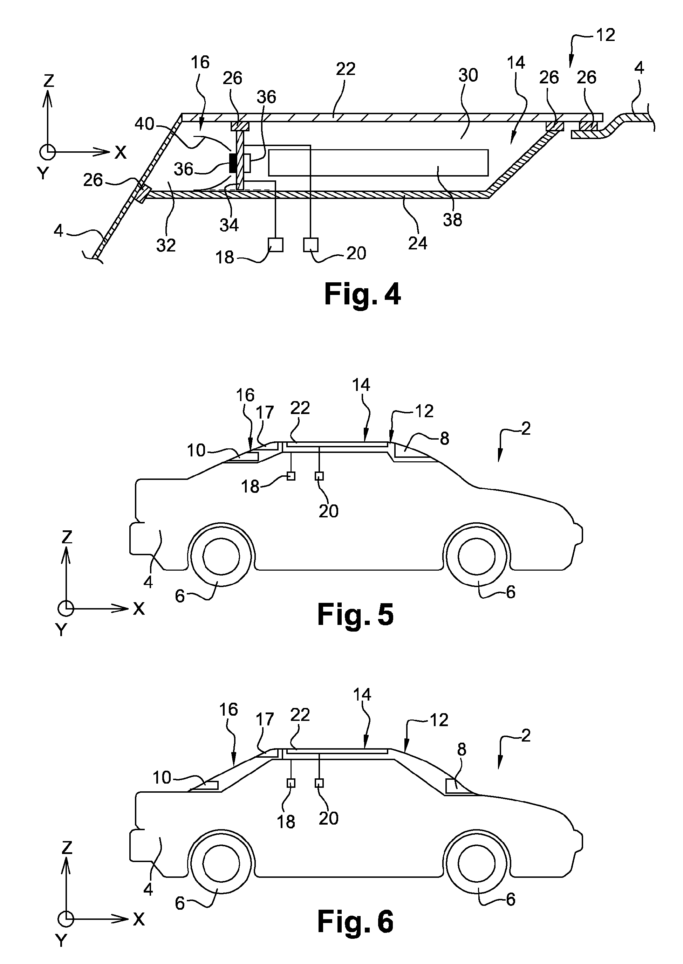

On a illustré en figure 4 une variante du module illustré en figure 2, qui diffère de celui-ci en ce que les deux compartiments 30, 32 du module 12 sont séparés par un unique PCB 34 connecté aux moyens d'éclairage intérieur 14 et aux moyens d'éclairage extérieur ou de signalisation extérieure 16. Deux sources de lumière 36 sont connectées au PCB 34, de part et d'autre de celui-ci.

On a illustré en figure 5 un véhicule automobile 2 sur lequel est monté un module 12 selon un deuxième mode de réalisation de l'invention, différant du premier mode en ce que le module 12 comprend en outre les blocs optiques avant 8 et les feux arrière 10 du véhicule 2. Le module 12 comprend ainsi des moyens électriques d'éclairage extérieur et des moyens électriques de signalisation extérieure, destinés à éclairer l'extérieur du véhicule 2 et à participer à la signalisation du véhicule 2.

On a illustré en figure 6 un véhicule automobile 2 sur lequel est monté un module 12 selon un troisième mode de réalisation de l'invention, qui diffère du deuxième mode en ce que le module 12 comprend en outre une partie de baie pour vitre de véhicule et au moins une partie de montants de l'un au moins d'un pare-brise avant, d'un pare-brise arrière et de vitres du véhicule. Le volume de ce module 12 étant plus grand que ceux des premier et deuxième modes de réalisation, un agencement plus souple des moyens d'éclairage extérieur ou de signalisation extérieure 16 est possible. Ainsi, le module 12 peut également comprendre d'autres éléments (non représentés pour des raisons de clarté des figures) choisis parmi :
- un rétroviseur intérieur de véhicule,
- un rétroviseur extérieur de véhicule,
- un essuie-glace avec de préférence des moyens d'entrainement de l'essuie-glace,
- une antenne de réception radio,
- une caméra,
- un capteur, et
- un revêtement de décoration du plafond 24.

Bien entendu, on pourra apporter à l'invention de nombreuses modifications sans sortir du cadre de celle-ci.

## Revendications

1. Module (12) formant un élément de carrosserie (22) pour véhicule automobile (2), ce module (12) participant à l'esthétique extérieure du véhicule (2) et étant destiné à être monté sur une caisse (4) du véhicule (2), **caractérisé en ce qu'**il comprend des moyens électriques d'éclairage intérieur (14), destinés à éclairer l'intérieur d'un habitacle du véhicule (2), et des moyens de raccordement (18) à une alimentation électrique des moyens d'éclairage intérieur (14).

2. Module (12) selon la revendication précédente, dans lequel l'élément de carrosserie (22) forme au moins une partie d'un toit du véhicule (2).

3. Module (12) selon l'une quelconque des revendications précédentes, comprenant de plus des moyens électriques d'éclairage extérieur ou de signalisation extérieure (16), destinés à éclairer l'extérieur du véhicule (2) ou participer à la signalisation du véhicule (2).

4. Module (12) selon la revendication précédente, comprenant au moins deux compartiments (30, 32) dans lesquels sont logés respectivement, d'une part, les moyens d'éclairage intérieur (14) et, d'autre part, les moyens d'éclairage extérieur ou de signalisation extérieure (16), ces deux compartiments (30, 32) étant séparés par une cloison (28) formée, le cas échéant, par un circuit imprimé (34) raccordé aux moyens d'éclairage intérieur (14) et/ou aux moyens d'éclairage extérieur ou de signalisation extérieure (16).

5. Module (12) selon la revendication 3 ou 4, dans lequel les moyens d'éclairage extérieur ou de signalisation extérieure (16) comprennent un système optique formant projecteur (8) du véhicule (2).

6. Module (12) selon l'une quelconque des revendications 3 à 5, dans lequel les moyens d'éclairage extérieur ou de signalisation extérieure (16) comprennent un système optique formant feu arrière (10) du véhicule (2).

7. Module (12) selon l'une quelconque des revendications 3 à 6, dans lequel les moyens d'éclairage extérieur ou de signalisation extérieure (16) comprennent un système optique formant feu stop central surélevé (17) du véhicule.

8. Module (12) selon l'une quelconque des revendications précédentes, comportant en outre au moins une partie de baie pour vitre de véhicule.

9. Module (12) selon l'une quelconque des revendications précédentes, comportant en outre au moins une partie de montants de l'un au moins d'un pare-brise avant, d'un pare-brise arrière et de vitres du véhicule.

10. Module (12) selon l'une quelconque des revendications précédentes, comprenant de plus au moins un élément choisi parmi :
- un rétroviseur intérieur de véhicule,
- un rétroviseur extérieur de véhicule,
- un essuie-glace avec de préférence des moyens d'entrainement de l'essuie-glace,
- une antenne de réception radio,
- une caméra,
- un capteur, et
- un revêtement de décoration.

11. Module (12) selon l'une quelconque des revendications précédentes, comprenant de plus des moyens de raccordement (20) à des moyens de communication de données, par exemple un bus de communication de données de type CAN ou LIN, acronymes respectifs des termes anglo-saxons « Controller Area Network » et « Local Interconnect Network ».
